Europäisches Patentamt

European Patent Office

Office européen des brevets

(19)

(11) Publication number: **0 223 362 B1**

# EUROPEAN PATENT SPECIFICATION

(12)

(45) Date of publication of patent specification: **06.05.92**

(51) Int. Cl.5: **H02M 7/06**, H02M 3/10, H02M 7/08

(21) Application number: **86307267.4**

(22) Date of filing: **22.09.86**

(54) Arrangement for switching rectified alternating current.

(30) Priority: **19.11.85 GB 8528501**

(43) Date of publication of application:
**27.05.87 Bulletin 87/22**

(45) Publication of the grant of the patent:
**06.05.92 Bulletin 92/19**

(84) Designated Contracting States:
**DE FR GB IT SE**

(56) References cited:
**GB-A- 2 087 176**
**US-A- 2 525 495**

(73) Proprietor: **LUCAS INDUSTRIES public limited company**
**Great King Street**
**Birmingham, B19 2XF West Midlands(GB)**

(72) Inventor: **Smith, Sidney Basil**
**216 Windmill Road**
**Adeyfield Hemel Hempstead HP2 4BU(GB)**

(74) Representative: **Cuddon, George Desmond et al**
**MARKS & CLERK Alpha Tower Suffolk Street Oueensway**
**Birmingham B1 1TT(GB)**

EP 0 223 362 B1

## Description

This invention relates to arrangements for switching rectified alternating current.

Where complete physical isolation of a load from its supply is required it may be undesirable to use solid state switch devices.

Switching of direct current by mechanical devices commonly gives rise to arcing at the switch contacts, particularly where the direct current is applied to an inductive load. Contacts for switching direct current, and the switch structure on which they are carried are therefore larger than those required for alternating current. While it is possible to overcome or reduce arcing by ensuring that the switch contacts carry only an interrupted supply, it is necessary to ensure that a continuous direct current is maintained when the switch contacts are closed.

The electrical supply in an aircraft is commonly multiphase alternating current provided by a brushless generator of the general type shown in US-A-2525495. The generator includes a three-phase exciter alternator which supplies the field winding of a main alternator by way of a full wave rectifier. Such a generator is usually provided with an electromechanical switch which will both de-energise and short-circuit the field winding in the event of an unacceptable rise in generator output. In order to reduce both the weight and volume of the switch, and to increase its simplicity, it is desirable that the number of switch elements for effecting deenergisation shall not be subject to arcing and that their number shall be a minimum.

An object of the invention is to provide an arrangement in which switching of a continuous rectified dc output can be effected by not more than two switch elements which are themselves subjected only to discontinuous currents, whereby arcing at those elements, as a result of disconnection of a direct current supply to an inductive load, is reduced or avoided.

GB-A-2087176 discloses an arrangement in which rectified alternating current may be mechanically switched without arcing, that arrangement involving switching of the alternating supply to the anodes of the rectifier elements. Where the alternating supply has three or more phases such a solution clearly requires more than two switches. Additionally, where rectified current from an alternating supply is to be supplied to a number of separately switched direct current loads, such a solution would clearly not be feasible. In the present invention only two switch elements are required for each load, whatever the number of phases in the alternating supply.

It is to be understood that the switching arrangement of the present invention is applicable to rectified alternating supplies other than those within electric generators, and is also applicable to rectified supplies which are derived from a single phase source.

According to the invention there is provided an arrangement for switching rectified alternating current, comprising a rectifier arrangement having input terminals for an a.c. input, a first d.c. terminal for a return direct current, and second and third d.c. terminals, said rectifier arrangement including rectifier elements connected so that first and second currents flowing through said second and third terminals respectively are discontinuous and that the sum of said first and second currents can provide a substantially continuous rectified output, and switch means operable between a first state in which said second and third terminals are commonly connected to a supply terminal for a load, and second state in which said second and third terminals are isolated from each other and from said supply terminal.

Embodiments of the invention will now be described by way of example only and with reference to the accompanying drawings in which:-

Figure I shows an arrangement for switching full wave rectified three phase alternating current,

Figure 2 shows the a.c. input voltages and the corresponding direct currents at the outputs of the rectifier in Figure I,

Figure 3 shows a modified arrangement for switching half-wave rectified three-phase alternating current,

Figure 4 shows a further modification for switching full wave rectified single phase alternating current,

Figure 5 shows part of an arrangement for switching full wave rectified four-phase alternating current, and

Figure 6 shows part of an arrangement for switching full-wave rectified five phase alternating current.

Figure I shows an example of the arrangement when used for d.c. supply to a field winding I0 of a brushless electric generator of a type commonly used for aircraft power supplies. Such a generator is shown and described in U.S. patent 2525495 and includes a pilot exciter alternator which has a three-phase output, this output being rectified and used to energise the field winding I0 which forms part of a main exciter alternator. The output of the main exciter alternator is regulated by providing that energising current through the field winding I0 is switched by a solid state device II controlled by a pulse-width modulating circuit I2. The circuit I2 is of a known type which forms no part of the present invention and is responsive to a reference voltage Vr and to the output voltage Vo of the generator, to maintain the voltage Vo at a desired level.

A full wave rectifier 14 has input terminals 15 to which the respective phases A, B, C of the exciter alternator output are applied. A first d.c. terminal 16 of the rectifier 14 is connected to a common d.c. return line 17. A second d.c. terminal 18 of the rectifier 14 is connected to the A phase terminal through a diode D1 and to the terminal 16 through a diode D7. The terminal 18 is also connected to the B phase terminal through a diode D2 and to the terminal 16 through a diode D6. Thus far the rectifier 14 corresponds to known three phase full wave rectifiers. The rectifier 14 of the present invention differs in that there is a third d.c. terminal 19 connected to the C phase terminal through a diode D4 and to the terminal 16 through a diode D5. The terminal 19 is also connected to the A phase terminal through a diode D3.

Terminals 18, 19 provide respective contacts of ganged switches 20, 21 operable by a solenoid 22. In the unoperated condition of the solenoid 22 the terminals 18, 19 are connected through a line 23 to a terminal 24 for the winding 10. In the unoperated condition (shown) of the solenoid 22 the terminals 18, 19 are isolated from the line 23 which is then connected through a line 25 to the other terminal 26 of the winding 10. The terminal 26 is connected through the solid state device 11 and the line 17 to the terminal 16.

A capacitor 27 and a diode 28 are connected in parallel with each other and in parallel with the winding 10. The capacitor 27 acts to smooth any voltage spikes which occur as the device 11 assumes an open circuit condition, at which times the energy stored in the winding 10 may also be shorted through the diode 28.

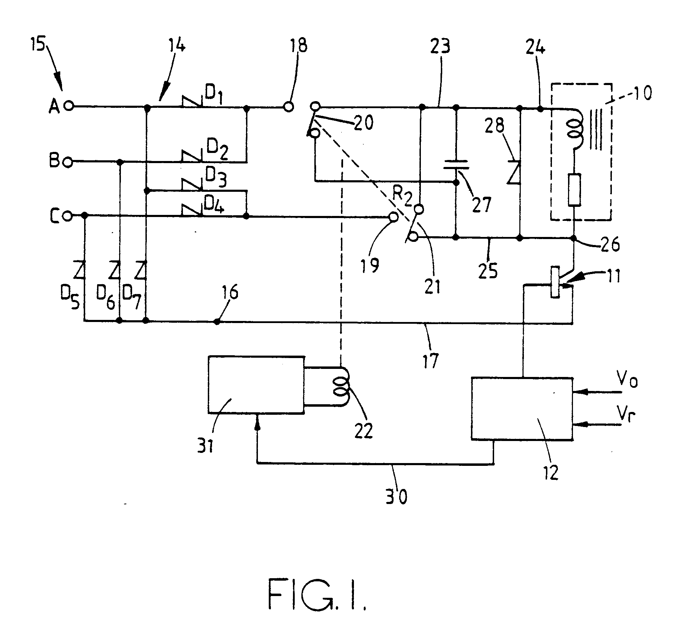

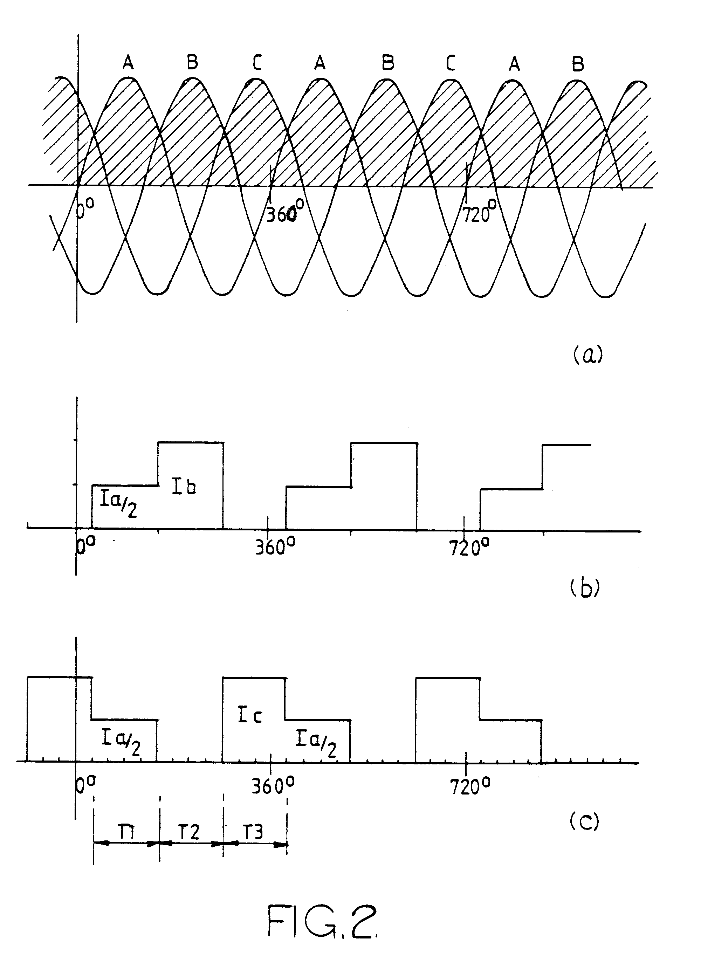

In normal use the solenoid 22 is energised so that both the terminals 18 and 19 are connected to the line 23. Figure 2a shows the three phases of the alternating input voltage at the terminals 15 and Figures 2b and 2c show the magnitudes and relative phases of the rectified currents at the terminals 18, 19 respectively, the substantially rectangular form of these currents arising from the high inductance of the winding 10. It will be seen that over time T1 a current Ia from phase A of the voltage supply is divided between the terminals 18, 19. Over time T2 a current Ib from the voltage phase B flows through terminal 18 only, and over time T3 a current Ic from the voltage phase C flows through terminal 19 only. The sum of the currents at terminals 18, 19 is a substantially constant direct current, so long as the device 11 is conducting. The current in line 23 is switched by the device 11 in accordance with a difference between the voltages Vo and Vr, as described above. The use of a semiconductor device 11 is satisfactory for this purpose since it is not required to provide total physical isolation between the field winding 10 and the terminal 16. Malfunction of the device 11 or circuit 12 can be such as to render the device 11 permanently conductive. An earth fault may also occur on the line 25. In either case the winding 10 is permanently energised and the output of the generator as a whole may be excessively high. Any such malfunction is detected by the circuit 12 which applies a signal on a line 30 to a control circuit 31 for the solenoid 22, de-energising the latter and causing the switches 20, 21 to move to the position shown in Figure 1. Since the switches 20, 21 are carrying currents as shown in Figure 2b and 2c respectively, these switches are therefore switching discontinuous currents and arcing is substantially reduced.

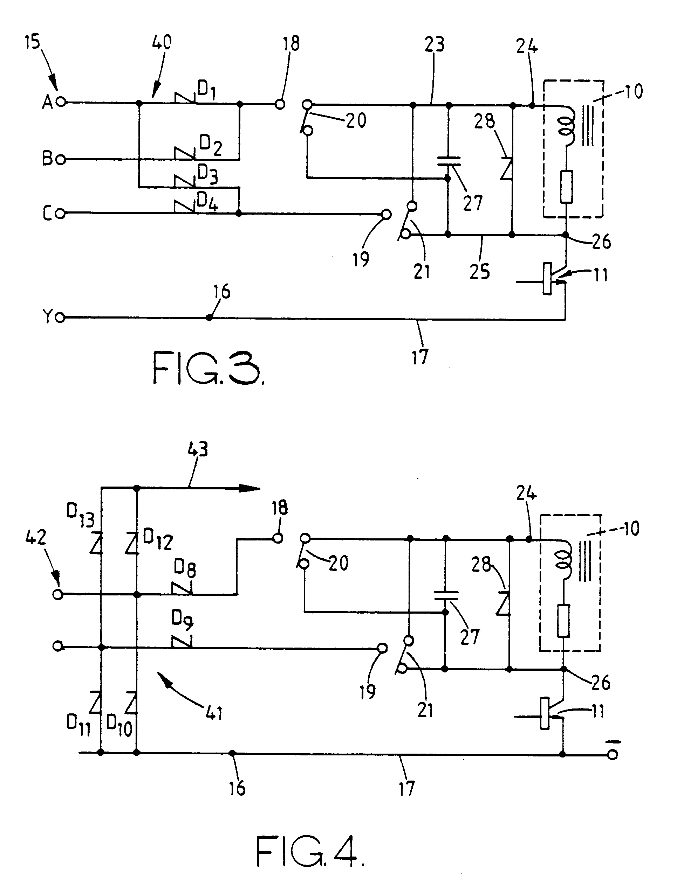

Figure 3 shows part of an alternative embodiment to that shown in Figure 1, corresponding parts having identical reference numerals. The embodiment of Figure 3 has a rectifier 40 having diodes D1, D2, D3 and D4 connected in the same way as the corresponding diodes in Figure 1, but diode connections between the terminals 16 and the terminals of the phases A, B, C are absent.

The arrangement shown in Figure 4 has a full wave rectifier arrangement 41 having diodes D8 and D9 connected between respective ones of input terminals 42 for the alternating supply and respective ones of the terminals 18, 19. The terminal 16 is connected to the respective input terminals through diodes D10 and D11. Additional diodes D12, D13 provide rectified current on a line 43 to control circuits, for example the control circuits 12, 31 of Figure 1, which are connected between lines 43 and 17 and which do not include high inductive loads and which may therefore be switched by semiconductor devices.

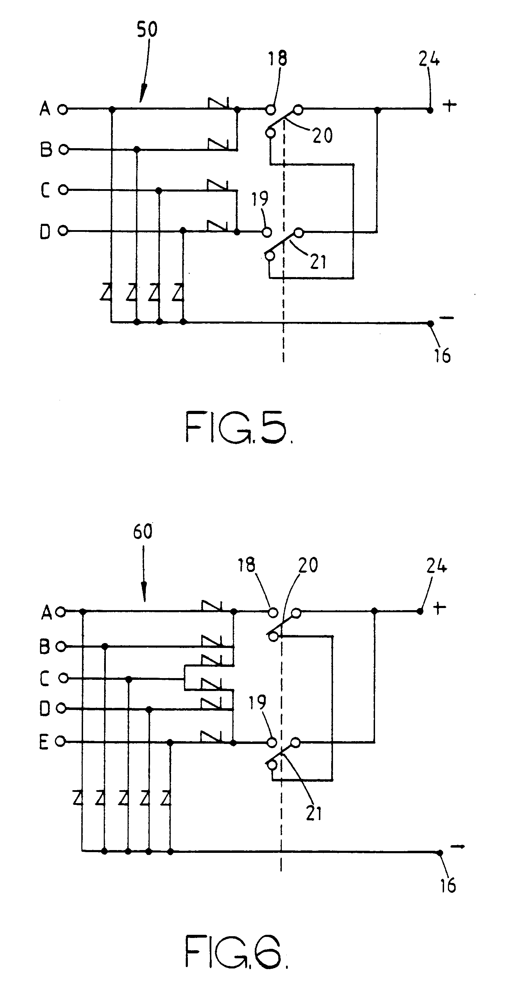

Figure 5 shows the switches 20, 21 are combined with a rectifier arrangement 50 which is responsive to four phases A, B, C, D of alternating current to provide full-wave rectified d.c. between the terminals 16, 24. It will be seen that currents flowing through terminals 18, 19 are derived from the voltages of phases A, B and phases C, D respectively.

Figure 6 shows the switches 20, 21 combined with a rectifier arrangement 60 which is responsive to five phases A, B, C, D, E of alternatiing current to provide full-wave rectified d.c. between the terminals 16, 24. It will be seen that this arrangement corresponds in principle to that of Figures 1 and 3, that is that for an odd number of phases n, when n is three or more, the currents at the terminals $\overline{18}$, $\overline{19}$ are each derived from $(n - 1)/2 + 1$ of the input

phases, the added one phase being the same for both currents, i.e. phase A in Figures I and 3, and phase C in Figure 5.

It will also be seen that in Figure 5 the currents through terminals I8, I9 are derived from respective halves, A + B and C + D of the total number of input phases.

In the case of a single phase input, as shown in Figure 4, the currents at terminals I8, I9 are derived from respective positive-going and negative-going half-phases of the input voltage.

It will also be seen that in each embodiment the rectifier arrangement has, in addition to a terminal for return direct current, two terminals I8, I9 through which discontinuous direct currents flow, so that the switches 20, 2I are not required to break continuous direct current, and arcing problems are reduced, enabling the use of smaller switch parts than would otherwise be required. In each of the described embodiments the rectifier arrangement has, in addition to a terminal for return direct current, two terminals I8, I9 to which the diodes in the rectifiers are connected so that the currents at the terminals I8, I9 are evenly divided in magnitude and phase so that the sum of these currents can be a continuous rectified output.

In alternative embodiments in which the number of input phases is odd and is three or more, the diodes of the rectifer arrangement may be connected so that the currents at the terminals I8, I9 are not evenly divided, provided that the switches 20, 2I will always break discontinuous currents. The latter requirement may be achieved by arranging the rectifier diodes so that the currents at the respective terminals I8, I9 are derived only from consecutive phases of the input, for example from phases A, B, C and phases D and E respectively in Figure 6.

## Claims

1. An arrangement for switching rectified alternating current, comprising a rectifier arrangement (I4 or 40 or 50 or 60) having input terminals (I5 or 42) for an a.c. input and first (I6) and second (I8) terminals for direct current, characterised in that said rectifier arrangement has a third direct current terminal (I9) and comprises rectifier elements (D) connected so that first and second currents flowing through said second (I8) and third (I9) terminals respectively are discontinuous and that the sum of said first and second currents can provide a substantially continuous rectified output, and switch means (20, 2I) operable between a first state in which said second (I8) and third (I9) terminals are commonly connected to a supply terminal (24) for a load (I0) and a second state in which

said second (I8) and third (I9) terminals are isolated from each other and from said supply terminal (24).

2. An arrangement as claimed in Claim I in which said switch means (20, 2I) provides a shunt for said load (I0) when operated in said second state.

3. An arrangement as claimed in Claim I or Claim 2 in which the number (n) of phases (A-C or A-E) of said a.c. input is odd and not less than three, the currents flowing through each of said second (I8) and third (I9) terminals being derived from I + (n-I)/2 of the phases of said input, only one of said input phases being used to derive both input currents.

4. An arrangement as claimed in Claim I or Claim 2 in which the number of said phases is even and the currents flowing through said second (I8) and third (I9) terminals are derived from respective halves of said number of phases.

5. An arrangement as claimed in Claim I or Claim 2 in which said a.c. input is single phase and the currents flowing through said second (I8) and third (I9) terminals are derived from respective positive-going and negative-going half waves of said a.c. input.

## Revendications

1. Un dispositif permettant de commuter du courant alternatif redressé, comportant un dispositif redresseur (14 ou 40 ou 50 ou 60), comprenant des bornes d'entrée (15 ou 42) pour une entrée de courant alternatif, une première (16) et une deuxième (18) borne pour courant continu, caractérisé en ce que ledit dispositif redresseur comprend une troisième borne de courant continu (19) et comporte des éléments redresseurs (D) raccordés de sorte que des premier et deuxième courants traversant respectivement lesdites deuxième (18) et troisième (19) bornes sont discontinus et que la somme des dits premier et deuxième courants peut fournir une sortie redressée pratiquement continue, ainsi qu'un moyen de commutation (20, 21), pouvant fonctionner entre un premier état, dans lequel lesdites deuxième (18) et troisième (19) bornes sont raccordées en commun à une borne d'alimentation (24) pour une charge (10), et un deuxième état, dans lequel lesdites deuxième (18) et troisième (19) bornes sont isolées l'une de l'autre et de ladite borne d'alimentation (24).

**2.** Un dispositif selon la revendication 1, dans lequel ledit moyen de commutation (20, 21) procurent un circuit de dérivation (shunt) pour ladite charge (10) en cas de fonctionnement dans le deuxième état.

**3.** Un dispositif selon la revendication 1 ou la revendication 2, dans lequel le nombre (n) de phases (A-C ou A-E) de ladite entrée de courant alternatif est impair et pas inférieur à trois, les courants traversant chacune des dites deuxième (18) et troisième (19) bornes étant dérivés de 1 + (n-1)/2 des phases de ladite entrée, une seule des dites phases d'entrée étant utilisée pour dériver les deux courants d'entrée.

**4.** Un dispositif selon la revendication 1 ou la revendication 2, dans lequel le nombre des dites phases est pair, les courants traversant lesdites deuxième (18) et troisième (19) bornes étant dérivés des moitiés respectives du dit nombre de phases.

**5.** Un dispositif selon la revendication 1 ou la revendication 2, dans lequel ladite entrée de courant alternatif est monophasée, les courants traversant ladite deuxième (18) et troisième (19) borne étant dérivés des demiondes respectives de sens positif et de sens négatif de ladite entrée de courant alternatif.

**Patentansprüche**

**1.** Eine Anordnung zum Schalten von gleichgerichtetem Wechselstrom, die eine Gleichrichteranordnung (14 oder 40 oder 50 oder 60) mit Eingangsanschlüssen (15 oder 42) für eine Wechselstromeingabe und einem ersten (16) und einem zweiten (18) Anschluß für Gleichstrom aufweist, dadurch gekennzeichnet, daß die Gleichrichteranordnung einen dritten Gleichstromanschluß (19) besitzt und versehen ist mit Gleichrichterelementen (D), die so geschaltet sind, daß ein erster und ein zweiter Strom, die durch den zweiten (18) bzw. den dritten (19) Anschluß fließen, diskontinuierlich sind und daß die Summe des ersten und des zweiten Stroms eine im wesentlichen kontinuierliche, gleichgerichtete Ausgabe ergeben, und einer Schalteinrichtung (20, 21) die zwischen einem ersten Zustand, in dem der zweite (18) und der dritte (19) Anschluß gemeinsam mit einem Versorgungsanschluß (24) für eine Last (10) verbunden sind, und einem zweiten Zustand, in dem der zweite (18) und der dritte (19) Anschluß voneinander und vom Versorgungsanschluß (24) isoliert sind, betreibbar ist.

**2.** Eine Anordnung gemäß Anspruch 1, in der die Schalteinrichtung (20, 21) für die Last (10) einen Nebenschlußwiderstand darstellt, wenn sie im zweiten Zustand betrieben wird.

**3.** Eine Anordnung gemäß Anspruch 1 oder Anspruch 2, in der die Anzahl (n) der Phasen (A-C oder A-E) der Wechselstromeingabe ungerade und nicht kleiner als drei ist, wobei die durch jeden der zweiten (18) und dritten (19) Anschlüsse fließenden Ströme aus 1 + (n-1)/2 der Phasen der Eingabe abgeleitet werden, wobei nur eine der Eingangsphasen für die Ableitung der beiden Eingangsströme verwendet wird.

**4.** Eine Anordnung gemäß Anspruch 1 oder Anspruch 2, in der die Anzahl der Phasen gerade ist und die durch den zweiten (18) und den dritten (19) Anschluß fließenden Ströme aus der jeweiligen Hälfte der Anzahl der Phasen abgeleitet werden.

**5.** Eine Anordnung gemäß Anspruch 1 oder Anspruch 2, in der die Wechselstromeingabe einphasig ist und die durch den zweiten (18) und den dritten (19) Anschluß fließenden Ströme aus den jeweiligen positiven und negativen Halbwellen der Wechselstromeingabe abgeleitet werden.

FIG.I.

FIG.2.

FIG.3.

FIG.4.

FIG.5.

FIG.6.